# FASCICULE DE BREVET EUROPEEN

(11) **EP 2 071 387 B1**
(45) Date de publication et mention de la délivrance du brevet: **04.05.2011**
(21) Numéro de dépôt: 08291156.1
(22) Date de dépôt: 08.12.2008
(51) Int. Cl.: G02B 27/30, G02B 27/34, G01M 11/02

(54) **Mire servant à projeter à l'infini un ensemble de repères**
Collimated target for projecting a set of marks to infinity
Kollimierte Zielscheibe zum Projektieren einer Markeranordnung im Unendlichen

(30) Priorité: 12.12.2007 FR 0708651
(43) Date de publication de la demande: 17.06.2009
(73) Titulaire: Cassidian Test & Services, 78990 Elancourt (FR)
(72) Inventeur: Lecoq, Pierre, 92370 Chaville (FR); Petit, Vincent, 75017 (FR); Delsol, Franck, 91290 Arpajon (FR)
(74) Mandataire: de Saint-Palais, Arnaud Marie

(56) Documents cités:
- EP-A- 0 539 264
- CH-A- 113 578
- US-A- 2 450 712

## Description

La présente invention concerne une mire servant à projeter à l'infini un ensemble de repères pouvant, par exemple, constituer une grille de points, de croix ou d'autres motifs et dont les positions sont connues très précisément afin de vérifier l'alignement et/ou la distorsion d'équipements optiques tels que, par exemple, des capteurs, des écrans collimatés...

Traditionnellement, une mire collimatée est réalisée à partir d'une plaque comportant l'ensemble des repères souhaités et d'un dispositif de projection à l'infini de ces repères comportant une combinaison de lentilles.

Cette combinaison de lentilles, souvent très complexe, est conçue de manière à réaliser non seulement la collimation mais également une correction des aberrations chromatiques et géométriques qui se manifestent d'autant plus que les dimensions de la mire située derrière les lentilles sont importantes.

Généralement, cette combinaison de lentilles est conçue spécifiquement pour chaque besoin particulier et présente un coût de réalisation très élevé.

Ainsi, on connaît le document EP 0 539 264 qui dévoile un procédé et un dispositif de détermination de l'orientation d'un solide dans l'espace, comportant une pluralité de dispositifs multifaisceaux composés d'une mire placée dans le plan focal d'un objectif de collimation.

Le dispositif objet de ce document vise à déterminer l'orientation de faisceaux lumineux dans un repère fixe, lesdits faisceaux étant émis à partir d'un repère mobile, de façon à déterminer l'orientation du repère mobile dans le repère fixe. Afin de parvenir à ce résultat, une pluralité de mires traditionnelles est installée sur un objet mobile, possédant chacune une pluralité de points lumineux et une source lumineuse unique, l'optique de collimation étant extérieure à la mire. Toutefois, ce dispositif nécessite un jeu de lentilles complexe qui ne permet pas de simplifier le montage optique traditionnel.

L'invention a donc plus particulièrement pour but de supprimer ces inconvénients.

A cet effet, au lieu d'utiliser une mire comportant une pluralité de repères lumineux et un dispositif de collimation commun à tous les repères de cette mire et qui, de ce fait, comporte une combinaison de lentilles complexe et coûteuse pour supprimer les aberrations, elle propose une mire comportant une pluralité d'ensembles micro-collimatés comportant chacun une source lumineuse, une mire élémentaire comportant un repère éclairé par ladite source ainsi que des moyens de collimation permettant de projeter à l'infini ledit repère.

Compte tenu du fait que dans chacun des ensembles micro-collimatés, le repère qui présente de très petites dimensions est centré sur l'axe optique des moyens de collimation, on s'affranchit des problèmes d'aberration précédemment évoqués et il devient possible d'utiliser des moyens de collimation consistant en une lentille de collimation simple, facile à monter et donc peu coûteuse.

Ainsi, contrairement aux préjugés de l'homme du métier qui aurait naturellement tendance à utiliser un seul montage optique pour réduire les coûts, cette solution s'avère moins coûteuse et offre en outre une plus grande souplesse d'utilisation.

Par ailleurs, les axes des ensembles collimatés pourront être orientés en fonction du champ nécessaire à la formation de l'image globale collimatée de la mire. Cette orientation pourra être obtenue de façon statique, par exemple par usinage du support de la mire ou dynamique par exemple grâce à l'emploi de micromécanismes, de systèmes magnétiques ou électromagnétiques, acousto-optiques, etc..

Des modes d'exécution de l'invention seront décrits ci-après, à titre d'exemples non limitatifs, avec référence aux dessins annexés dans lesquels :
La figure 1 est une vue de face d'une mire selon l'invention comprenant une pluralité d'ensembles micro-collimatés ;
La figure 2 est une coupe d'un ensemble micro-collimaté utilisé dans la mire représentée figure 1 ;
Les figures 3 et 4 montrent une variante d'exécution d'un ensemble micro-collimaté équipé d'un dispositif de réglage de la mire élémentaire, la figure 3 étant une vue en perspective schématique, la figure 4 étant une coupe axiale partielle ;
Les figures 5 à 8 sont des représentations schématiques des positions extrêmes d'une mire élémentaire.

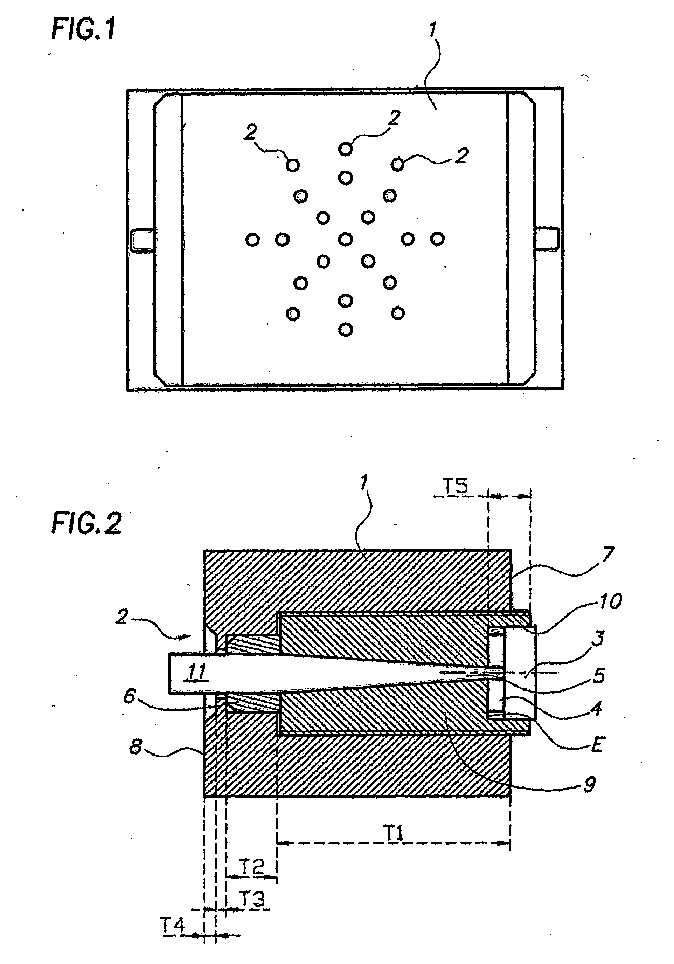

Dans l'exemple illustré sur les figures 1 et 2, la mire selon l'invention se compose d'une plaque support 1 munie d'une pluralité de perçages traversants 2 de faible diamètre (quelques millimètres) dans chacun desquels est disposé un ensemble collimaté comportant une source lumineuse 3, une mire élémentaire 4 formant un repère lumineux 5 éclairé par la source 3 et une lentille de collimation 6 permettant de projeter à l'infini ledit repère 5.

Dans cet exemple, les perçages 2 et, en conséquence, les repères micro-collimatés sont disposés de manière à constituer un motif "rayonnant" à partir d'un repère central. La position de ces repères est déterminée et connue avec précision.

Les perçages 2 de la plaque support logeant les ensembles collimatés présentent chacun une forme cylindrique étagée à plusieurs niveaux d'alésage comportant :
- un premier tronçon cylindrique taraudé T₁ qui s'étend depuis la face postérieure 7 de la plaque 1 et présente ici une longueur sensiblement égale aux trois quart de l'épaisseur de la plaque 1,
- un deuxième tronçon T₂ à surface cylindrique lisse qui présente un diamètre inférieur à celui du premier tronçon T₁,
- un troisième tronçon T₃, de faible longueur, de diamètre inférieur à celui du deuxième tronçon T₂: ce troisième tronçon T₃ se présente sous la forme d'une bague annulaire, formant un rétrécissement d'alésage,
- un quatrième tronçon T₄, de forme tronconique, allant en s'évasant jusqu'à la face antérieure 8 de la plaque 1.

A l'intérieur du perçage 2 est disposée la lentille de collimation 6, de forme en partie cylindrique, de diamètre sensiblement égal à celui du deuxième tronçon T₂ et de longueur légèrement supérieure à celui-ci.

Cette lentille 6 est engagée dans le deuxième tronçon T₂ de manière à venir axialement en butée sur l'épaulement d'alésage du troisième tronçon T₃.

Le maintien en position de la lentille 6 dans le deuxième tronçon T₂ est assuré au moyen d'une douille cylindrique 9 à surface extérieure filetée venant se visser dans le taraudage du premier tronçon T₁ jusqu'à ce qu'il vienne en appui sur la lentille 6 pour la maintenir appliquée contre l'épaulement du tronçon T₃.

La surface intérieure cylindrique de la douille présente, du côté opposé à sa surface d'appui sur la lentille, un étagement d'alésage 10 formant un tronçon d'alésage cylindrique T₅ de plus grand diamètre dans lequel est disposée la mire élémentaire 4 éclairée par la source lumineuse 3. La mire élémentaire 4 consiste en un disque plat muni en son centre d'un perçage constituant le repère lumineux 5.

Dans cet exemple, la source lumineuse 4 a été représentée schématiquement par un bloc, étant entendu que l'invention ne se limite pas à une source lumineuse particulière.

La mire élémentaire 4 est ici centrée sur l'axe optique de la lentille 6 et sa face antérieure est placée dans le plan focal objet de ladite lentille 6.

De ce fait, à la sortie de la lentille 6 on obtient un faisceau de lumière parallèle. L'image du repère lumineux 5 étant projetée à l'infini.

Grâce à ces dispositions, la mire selon l'invention se comporte d'une façon analogue aux mires classiques utilisant un montage optique commun aux repères lumineux de la mire. Toutefois, les faisceaux émis par les ensembles micro-collimatés ne sont pas sujets à des phénomènes d'aberration comme c'est le cas dans les mires classiques.

Le champ nécessaire à la formation de l'image globale collimatée produite par la mire illustrée figure 1 est obtenu en inclinant, selon un angle prédéterminé, l'axe optique des ensembles micro-collimatés. Cette inclinaison peut être obtenue de façon statique lors de l'usinage des perçages 2 ou dynamique en utilisant par exemple des montages micromécaniques, magnétiques ou autres.

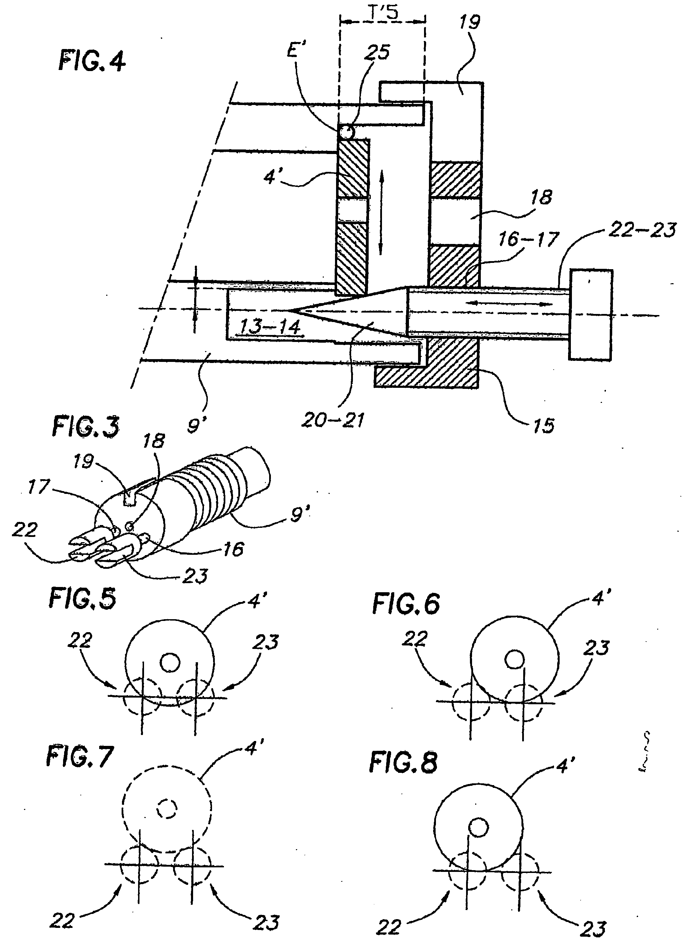

Les figures 3 à 8 illustrent le principe d'un dispositif de centrage et/ou de rattrapage de jeu de la mire élémentaire 4 dans une douille entretoise 9' du type de la douille 9 représentée figure 2.

Dans cet exemple, la douille entretoise 9' est munie du côté de la mire élémentaire 4' de deux perçages axiaux disposés à environ 45° l'un de l'autre, qui débouchent dans le tronçon d'alésage cylindrique T'₅.

Par ailleurs, de ce même côté, la douille entretoise 9' peut être refermée par un outillage de réglage comportant un corps 15 en forme de couvercle qui vient se visser sur l'extrémité de la douille entretoise 9'. Ce corps 15 comprend deux perçages taraudés 16, 17 situés respectivement dans l'axe des perçages axiaux 13, 14, un perçage central 18 destiné à recevoir (ou être éclairé par) une source lumineuse et une cavité axiale 19 formée dans la bordure du couvercle opposée aux deux perçages taraudés 16, 17.

Comme précédemment, la mire élémentaire 4' présente un diamètre inférieur au diamètre du tronçon T'₅ d'alésage de la douille 9' et est disposée axialement en butée contre l'épaulement d'alésage E'.

Elle est retenue verticalement sur deux cônes de support 20, 21 qui prolongent coaxialement deux vis de réglage 22, 23 venant respectivement se visser dans les perçages taraudés 16, 17.

Grâce à ces dispositions, le déplacement de la mire élémentaire 4' dans un plan radial de la douille entretoise 9' est obtenu par effet de coin en tournant les vis 22, 23 de manière à engendrer des déplacements axiaux des extrémités coniques desdites vis 22, 23.

Le contrôle de la position de l'axe optique de chaque micro-collimateur (matérialisé par la position de la mire élémentaire 4') est effectué à l'aide d'un théodolite, l'éclairement de la micro mire 4' étant alors assuré grâce à la source lumineuse associée à l'outillage de réglage.

Lorsque la mire élémentaire 4' est correctement placée, un point de colle 25 est injecté par la cavité axiale 19.

Les figures 5 à 8 montrent diverses positions de la micro mire en fonction du niveau de vissage des vis.

Ainsi, la figure 5 correspond à une position dans laquelle les vis 22, 23 sont à l'état dévissé. Dans la figure 6, la vis 22 est à l'état vissé tandis que la vis 23 est à l'état dévissé. La figure 7 correspond à une position dans laquelle les deux vis 22, 23 sont à l'état vissé. Dans la figure 8, la vis 23 est à l'état vissé tandis que la vis 22 est à l'état dévissé.

Comme précédemment indiqué, la solution proposée par la présente invention présente de nombreux avantages. En particulier:
- La dimension globale de la mire micro-collimatée n'est pas limitée. La dimension globale peut aller bien au-delà de ce qui pourrait être envisageable avec une combinaison de lentille.
- La forme du collimateur n'est pas limitée. On peut envisager la réalisation de collimateurs concaves ou convexes permettant d'englober des détecteurs à très grands champs (exemple : dôme de projection pour caméra grand champs).
- La dynamique des repères. Il est possible de piloter indépendamment chaque repère et de réaliser ainsi une mire collimatée dynamique.
- La réalisation aisée de mire collimatée visible, infra rouge, proche infra rouge ou combiné.
- Le coût de réalisation est bien inférieur à un collimateur à combinaison de lentille.

## Revendications

1. Mire collimatée servant à projeter à l'infini un ensemble de repères, et comprenant une pluralité d'ensembles micro-collimatés comportant chacun une source lumineuse (3), une mire élémentaire (4) comportant un repère (5) éclairé par ladite source ainsi que des moyens de collimation (6) permettant de projeter à l'infini ledit repère (5).

2. Mire selon la revendication 1,
**caractérisée en ce que** les moyens de collimation (6) consistent en une lentille de collimation.

3. Mire selon l'une des revendications 1 et 2,
**caractérisée en ce que** les axes des ensembles collimatés sont orientés en fonction du champ nécessaire à la formation de l'image globale collimatée de la mire.

4. Mire selon la revendication 3,
**caractérisée en ce que** l'orientation des ensembles collimatés est obtenue par usinage du support (1) de la mire.

5. Mire selon la revendication 3,
**caractérisée en ce que** l'orientation des ensembles micro-collimatés est assurée grâce à des micromécanismes, des systèmes magnétiques, électromagnétiques ou même acousto-optiques.

6. Mire selon l'une des revendications précédentes,
**caractérisée en ce que** la mire comprend une plaque support (1) comportant une pluralité de perçages traversants (2) comportant chacun un premier tronçon cylindrique taraudé (T₁) qui s'étend depuis la face postérieure (7) de la plaque (1), un deuxième tronçon (T₂) à surface cylindrique lisse de diamètre inférieur à celui du premier tronçon (T₁), un troisième tronçon de diamètre inférieur à celui du deuxième tronçon, une lentille (6) disposée dans le deuxième tronçon de manière à venir en butée sur un épaulement d'alésage du troisième tronçon, une douille filetée venant se visser dans le taraudage du premier tronçon (T₁) pour maintenir la lentille (6) appliquée sur ledit épaulement, ladite douille présentant un étagement d'alésage formant un tronçon d'alésage (T₅) de plus grand diamètre.

7. Mire selon l'une des revendications précédentes,
**caractérisée en ce qu'**elle comprend un dispositif de centrage et/ou de rattrapage de jeu de la mire élémentaire, ce dispositif comprenant un corps porté par la susdite douille filetée et muni de deux perçages taraudés dans lesquels viennent se visser deux vis terminées par deux portions coniques supportant ladite mire élémentaire.

8. Mire selon la revendication 7,
**caractérisée en ce que** le susdit dispositif de centrage et de rattrapage comprend une source lumineuse.

9. Mire selon la revendication 7,
**caractérisée en ce que** ledit corps présente la forme d'un couvercle refermant ladite douille entretoise.

10. Mire selon la revendication 9,
**caractérisée en ce que** ledit corps comprend une cavité axiale par laquelle on peut injecter un point de colle assurant la fixation de la mire élémentaire (4').

11. Mire selon l'une des revendications 7 à 10,
**caractérisée en ce que** ladite douille filetée comprend deux perçages axiaux dans lesquels viennent respectivement s'engager les extrémités coniques desdites vis.

## Claims

1. A collimated test object used for projecting a set of marks to infinity, comprising a plurality of microcollimated sets each including a light source (3), an elementary test object (4) including a mark (5) illuminated by said source as well as collimation means (6) for projecting said mark (5) to infinity.

2. The test object according to claim 1,
**characterized in that** the collimation means (6) consist in a collimation lens.

3. The test object according to one of claims 1 and 2,
**characterized in that** the axes of the collimated sets are oriented depending on the field required for forming the overall collimated image of the test object.

4. The test object according to claim 3,
**characterized in that** the orientation of the collimated sets is obtained by machining of the support (1) of the test object.

5. The test object according to claim 3,
**characterized in that** the orientation of the microcollimated sets is ensured by means of micromechanisms, magnetic, electromagnetic or even acousto-optical systems.

6. The test object according to any of the preceding claims,
**characterized in that** the test object comprises a supporting plate (1) including a plurality of through-perforations (2) each including a first tapped cylindrical section (T₁) which extends from the rear face (7) of the plate (1), a second section (T₂) with a smooth cylindrical surface of a diameter less than that of the first section (T₁), a third section with a diameter less than that of the second section, a lens (6) positioned in the second section so that it will abut on a bore shoulder of the third section, a threaded bushing which will be screwed into the internal thread of the first section (T₁) in order to maintain the lens (6) applied on said shoulder, said bushing having a bore stepping forming a bore section (T₅) of larger diameter.

7. The test object according to any of the preceding claims,
**characterized in that** it comprises a centering or play compensating device of the elementary test object, this device comprising a body borne by the aforesaid threaded bushing and provided with two tapped perforations into which two screws terminated by two conical portions supporting said elementary test object will be screwed.

8. The test object according to claim 7,
**characterized in that** the aforesaid centering and compensating device comprises a light source.

9. The test object according to claim 7,
**characterized in that** said body has the shape of a lid closing said spacer bushing.

10. The test object according to claim 9,
**characterized in that** said body comprises an axial cavity through which a point of adhesive may be injected in order to ensure attachment of the elementary test object (4').

11. The test object according to any of claims 7 to 10,
**characterized in that** said threaded bushing comprises two axial perforations into which the conical ends of said screws will engage respectively.

## Patentansprüche

1. Mit einem Kollimator versehener Testbilderzeuger, welcher zum Projizieren einer Anordnung von Markierungen in das Unendliche dient, und eine Vielzahl an Einheiten zur Mikrokollimation aufweist, die jeweils eine Lichtquelle (3), einen Elementar-Testbilderzeuger (4), welcher eine durch die Lichtquelle beleuchtete Markierung (5) ausbildet, sowie Kollimationsmittel (6) zur Projektion der Markierung (5) in das Unendliche aufweisen.

2. Testbilderzeuger nach Anspruch 1,
**dadurch gekennzeichnet, dass** die Kollimationsmittel (6) aus einer Kollimationslinse bestehen.

3. Testbilderzeuger nach einem der Ansprüche 1 oder 2,
**dadurch gekennzeichnet, dass** die Achsen der Koltimations-Einheiten entsprechend dem zur Ausbildung des durch Kollimation erzeugten Gesamtbildes des Testbilderzeugers erforderlichen Raster orientiert sind.

4. Testbilderzeuger nach Anspruch 3,
**dadurch gekennzeichnet, dass** die Orientierung der Kollimations-Einheiten durch die Fertigung eines Trägers (1) des Testbilderzeugers bewirkt wird.

5. Testbilderzeuger nach Anspruch 3,
**dadurch gekennzeichnet, dass** die Orientierung der Einheiten zur Mikrokollimation mittels Mikromechanismen, magnetischen, elektromagnetischen oder akustisch-optischen Systemen bewirkt wird.

6. Testbilderzeuger nach einem der vorhergehenden Ansprüche,
**dadurch gekennzeichnet, dass** der Testbilderzeuger eine Trägerplatte (1) mit einer Vielzahl durchgehender Bohrungen (2) aufweist, wobei jede einen ersten zylindrischen Gewindeabschnitt (T₁), welcher sich von der hinteren Seite (7) der Platte (1) erstreckt, einen zweiten zylindrischen glattflächigen Abschnitt (T₂) mit einem kleineren Durchmesser als der des ersten Abschnitts (T₁), einen dritten Abschnitt mit einem kleineren Durchmesser als der des zweiten Abschnitts, eine Linse (6), welche in zum Anliegen kommender Weise in dem zweiten Abschnitt gegen einen Vorsprung der Bohrung des dritten Abschnitts angeordnet ist, und eine Gewindebuchse aufweist, welche in das Innengewinde des ersten Abschnitts (T₁) einschraubbar ist, um die Linse (6) am Vorsprung anliegend zu halten, wobei die Gewindebuchse eine mehrstufige Bohrung aufweist, welche einen Bohrungsabschnitt (T₅) mit dem größten Durchmesser ausbildet.

7. Testbilderzeuger nach einem der vorhergehenden Ansprüche,
**dadurch gekennzeichnet, dass** dieser eine Vorrichtung zur Zentrierung und/oder zur Spielverringerung des Elementar-Testbilderzeugers aufweist, wobei die Vorrichtung einen Körper aufweist, welcher von der Gewindebuchse getragen wird und mit zwei durchgehenden Bohrungen versehen ist, in welche zwei Schrauben einschraubbar sind, die von zwei konischen Abschnitten abgeschlossen werden, welche den Elementar-Testbilderzeuger tragen.

8. Testbilderzeuger nach Anspruch 7,
**dadurch gekennzeichnet, dass** die Vorrichtung zur Zentrierung und Spielverringerung eine Lichtquelle aufweist.

9. Testbilderzeuger nach Anspruch 7,
**dadurch gekennzeichnet, dass** der Körper die Form eines die Distanzbuchse abschließenden Deckels aufweist.

10. Testbilderzeuger nach Anspruch 9,
**dadurch gekennzeichnet, dass** der Körper einen axialen Hohlraum aufweist, durch welchen man einen Klebstofftropfen zur Sicherung des Elementar-Testbilderzeugers (4') injizieren kann.

11. Testbilderzeuger nach einem der Ansprüche 7 bis 10,
**dadurch gekennzeichnet, dass** die Gewindebuchse zwei axiale Bohrungen aufweist, in welche jeweils die konischen Endstücke der Schrauben eingreifen.
